# EUROPEAN PATENT APPLICATION

(11) **EP 4 573 921 A1**
(43) Date of publication of application: **25.06.2025**
(21) Application number: 23219366.4
(22) Date of filing: 21.12.2023
(51) Int. Cl.: A23G 1/00, A23G 1/06, A23G 1/30, A23G 1/56, A23L 5/20, A23L 25/00

(54) **METHOD FOR PROCESSING FAT- OR OIL-CONTAINING MASS**

(71) Applicant: Bühler AG, 9240 Uzwil (CH)
(72) Inventor: Jovcic-Paggios, Ana, 8280 Kreuzlingen (CH); Paggios, Konstantinos, 8280 Kreuzlingen (CH); Lico, Franco, 21050 Cuasso al Monte (IT)
(74) Representative: Hepp Wenger Ryffel AG

(57) **Abstract**

The present invention is related to a method of processing a material, said material being selected from the group consisting of a solid raw material that upon grinding releases a liquid phase, and a combination of a solid raw material and a liquid matrix, the method comprising roasting and comminuting the solid raw material, characterized in that roasting and comminuting the solid raw material are carried out simultaneously in the same step. The present invention is furthermore related to a plant for carrying out said method, and to a product obtainable by said method.

## Description

The present invention is related to a method for processing a fat- and/or oil-containing mass, such as cocoa-containing material.

The processing of solid and/or liquid fat masses, especially in food production, involves several processing steps (see e.g. www.nutmachines.com/line/cocoa-processing-line.html). Usually in a first step, the components of the fat mass are mixed together. According to the present invention, a component is to be understood as a substance or ingredient which is either suspended in the fat mass as a solid or in dissolved form or is added to it. For example, a chocolate mass can be made from the components cocoa butter, sugar, milk powder and cocoa powder.

In subsequent steps, the resulting mixture may be subjected to further processing steps such as roasting (for the development of flavor), debacterization, braking/winnowing, and grinding. Optionally, volatiles and/or moisture may be stripped off in a thin-film evaporator at the end of the conventional processing.

In said conventional method, a roasting step is typically carried out before grinding, so that the particle size reduction in the grinding step only is performed after the flavor has been developed in the roasting step.

In the case of the processing of cocoa, accordingly the heat treatment during roasting is performed on whole beans or broken beans (nibs). In said conventional step, heat dynamics strongly depend on fluidization and the mass and air exchange. The process is prone to uneven heat distribution and non-even aroma development in the processed material.

The conventional method is also complex, requiring several separate processing steps. This applies in particular to processing lines where for the development of flavor an additional step in a thin-film evaporator is performed.

It was the problem underlying the present invention to overcome the drawbacks of the prior art and in particular to provide a method for processing a fat- and/or oil-containing mass, such as cocoa-containing material, that is less complex and allows for the production of a product having improved characteristic.

The above problem has been solved by the subject-matter of the claims.

In particular, the present invention is related to a method of processing a material, said material being selected from the group consisting of a solid raw material that upon grinding releases a liquid phase, and a combination of a solid raw material and a liquid matrix, the method comprising roasting and comminuting the solid raw material, characterized in that roasting and comminuting the solid raw material are carried out simultaneously in the same step.

According to the present invention, it has been found that improved results can be obtained if thermal treatment and grinding of the material is carried out simultaneously in the same process step. During said step, a liquid matrix is either generated by liquid material, such as fat and/or oil, that is released from the solid raw material, or is provided by a combination of a solid raw material with a liquid matrix serving as a dispersing agent. According to the present invention, a liquid roasting process is thus conducted.

During said step of simultaneous roasting and comminuting, said liquid matrix becomes enriched by aromatic compounds, while VOC (volatile organic components) and moisture are stripped off from the material more efficiently, due to the simultaneous reduction of the particle size of the material (such as cocoa beans). Because of the simultaneous roasting and comminution, the generation of other volatile and non-volatile aromatic components is induced that define the final aroma and taste profile. The liquid matrix can be enriched with aromas and flavors of the released liquid material, preferably fat and/or oil, from the initial infeed solid raw material.

It has also been found that by the method of the present invention the amount of VOC and moisture in the processed material can be significantly reduced, which allows an acceleration of downstream processing steps such as conching. It is believed that the diffusion kinetics of the aromatic substances to the amorphous surface is shortened, and thus the duration of processing steps such as conching can be significantly reduced to preferably 50% of their conventional duration.

The method of the present invention is suitable for any solid raw material that upon grinding may release a liquid phase, preferably fat and/or oil. For example, the present invention may be used for the processing of solid raw material is selected from the group consisting of cocoa-containing material, preferably cocoa beans and cocoa nibs, nuts and seeds, preferably almonds.

Alternatively, the method of the present invention is also suitable for solid raw material that does not release any fat and/or oil during grinding, but which together with added liquid forms a suspension during grinding and can thus be processed according to the present invention. For example, such a material may be selected from the group consisting of coffee beans, grains, pulses, and barley.

According to one embodiment, the solid raw material is combined with a liquid matrix. Preferably, said liquid matrix is selected from the group consisting of water and an edible oil, and a mixture of both, such as sunflower oil. Said liquid matrix serves as a dispersing agent. A suspension is formed from said solid raw material and said liquid matrix, which can be subjected to simultaneous liquid roasting and grinding. In this embodiment, the amount of liquid matrix to be added is preferably in a range from 0,1 to 50 wt.-%, more preferably 1-20 wt.-% of the solid raw material.

According to another embodiment, it is not necessary to add a liquid matrix to the solid raw material to be processed, since the solid raw material release a liquid material that forms the required liquid matrix in situ during the method of the present invention.

The solid raw material may be mixed together, if necessary, in a conventional mixing device. In one embodiment, the solid raw material is combined with a liquid matrix, which may also be carried out in a conventional mixing device. Depending on whether a pre-grinding step is to be carried out, and whether it should be of the wet or dry milling type, the liquid matrix may also be added only after the pre-grinding step.

According to one embodiment of the present invention, before being subjected to the step of simultaneous roasting and grinding, the solid raw material may be subjected to a pre-grinding step. Pre-grinding may be performed in a conventional milling device such as an impact mill, for example a colloid mill, or alternatively by means of centrifugal grinding, or high shearing grinding devices, in order to somewhat reduce the particle size of the solid raw material. Typically, after pre-grinding the solid raw material will have an average particle size below 1mm, preferably below 0,5 mm, but not less than 0.1 mm.

According to the present invention, roasting and comminuting the solid raw material are carried out simultaneously in the same step. This means that both processes occur at the same time in the same process step in the same device.

According to a preferred embodiment of the present invention, the method is carried out continuously.

According to a preferred embodiment of the present invention, roasting and comminution of the solid raw material are carried out simultaneously in a grinding and homogenizing device, which comprises a substantially horizontally arranged drum, the end of which is open and not or only slightly tapered, and a shaft which is at least partially provided with pins.

Such a device is known, for example, from WO 2007/066362 or EP 2 488 289 B1, but was not described for grinding (due to lack of a corrugation in the inner surface of the grinding zone, in combination with application of a low tip speed and a constrained number of pins on the rotary element), but for centrifugal mixing and homogenization.

As described above, the device comprises a substantially horizontally arranged drum. The drum contains a rotating shaft that is at least partially provided with pins. The rotating shaft is held in said drum by a front support, or in the case of drums of more than 400 mm length it is supported by a further component, for example integrated in an outlet funnel to avoid oscillation of shaft due to high speeds. In any case, there is no rear support and accordingly the drum is open at said end.

To generate a feed, the pins can be arranged in a spiral manner, preferably in a setup similar as in a rotor. Due to the high speed of the pins, the in-fed material is forced centrifugally against the inner walls of the drum and thereby comminuted. The introduced solid raw material is constantly mixed by the pins.

The density of the pins can vary along the shaft. In the case of spirally arranged pins, the pitch of the spiral can change, in extreme cases to such an extent that back-feeding is possible. The pins can be of the same type, for example have a round cross-sectional area of the same diameter. Alternatively, different types of pins can be arranged on the shaft, for example with different cross-sectional areas (polygonal, elliptical, round) or with different diameters. Preferably, the pins are cylindrical, but they can also be club-shaped or shovel-shaped.

According to the invention, preferably an open grinding and homogenizing device is used. This provides a free discharge of the masses so that there is no backflow of the masses.

For this purpose, the end of the drum is open and not or only slightly tapered. The mass can also be discharged by a discharge device, such as a screw conveyor. In the case of a screw conveyor mounted on two sides, free discharge can be ensured by a concentric opening, for example.

The operational principle of the horizontal grinding and homogenizing device according to the invention involves a longitudinal advancement of the mixed product, tangential to the axis of mixing along the inner surface of the drum, and allows the introduction of liquid or solid components, at atmospheric pressure, into advanced positions along the drum.

Preferably, the inner surface of the drum is uneven, for example stepped or corrugated, in order to ensure the desired grinding action. Preferably, the distance between the inner surface and the pins is in a range from 0,4 mm to 1 mm, more preferably 0,5 to 0,7 mm, to assist the grinding action.

According to the invention, the rotating mixing shaft of the horizontal grinding and homogenizing device works at a high revolution rate and hence the high-speed processing reduces the residence times of products inside the device. This also means reducing chamber volumes of the device.

The grinding and homogenizing device to be used for the method of the present invention preferably acts like a turbine engine and thus provides a suction action. This avoids the need of forcing an air stream into the device. It is understood, however, that complimentary options like forcing an air stream into the device or applying reduced pressure at the device may nevertheless be implemented, if desired.

The temperature in the grinding and homogenizing device can be selected by bringing the in-fed solid raw material to a desired temperature. Preferably, however, the jacket of the drum is temperature-controlled, for example by means of a double-wall structure of the jacket.

The material processed in the grinding and homogenizing device is thrown against the inner wall of the device due to a centrifugal force acting in the device. This creates a thin layer of material on the inner surface of the device, reducing the diffusion path of volatile substances. This has a particularly beneficial effect on the removal of VOCs. The removal of moisture from the material is also positively influenced.

In addition, an advantageous dispersion of aromatic or flavor in the liquid matrix provided by the material can be achieved in the grinding and homogenizing device, so that the liquid matrix becomes enriched with aromas and flavors.

According to a preferred embodiment, the grinding and homogenizing device has a diameter in the range from 100-300 mm, preferably 150-250 mm, and a length of 100 to 1000 mm, preferably 190 to 350 mm. The shaft which is at least partially provided with pins is preferably rotated with a speed of 40 to 120 m/s, preferably 70 to 100 m/s, thus providing a high tip speed in the device. The temperature in the grinding and homogenizing device can be adjusted according to the material processed, for example in the range from 40 to 90°C, preferably 50 to 80°C. The throughput of material preferably lies in a range from 100 to 1000 kg/h, more preferably 200 to 700 kg/h, and even more preferably 300 to 600 kg/h.

According to the present invention, the same process step of simultaneously roasting and comminuting the solid raw material may be carried out one time or several times, preferably twice or three times.

According to the present invention, the method may be carried out in one grinding and homogenizing device, or alternatively in several sequentially arranged grinding and homogenizing devices, preferably two or three sequentially arranged grinding and homogenizing devices.

If depending on the dimensions of the processing zone and the desired characteristics of the product to be produced the method according to the present invention is carried out several times, preferably twice or three times, this can be achieved by either feeding the material repeatedly in one grinding and homogenizing device, thus performing the method according to the present invention repeatedly in the same device (single passe, double pass, triple pass etc.). Alternatively, the method according to the present invention can be carried out several times, preferably twice or three times, by feeding material processed in a first grinding and homogenizing device into a further grinding and homogenizing device arranged downstream of the first grinding and homogenizing device, and thereafter into a further grinding and homogenizing device arranged downstream of the second grinding and homogenizing device, and so on until the desired repetitions of the method of the present invention are carried out.

According to the present invention, it is understood that in each grinding and homogenizing device the roasting and comminuting of the solid raw material are carried out simultaneously in the same step.

With each repetition of the method of the present invention, a further particle size reduction as well as stripping-off of VOCs and moisture can be achieved. In addition, repeating the method of the present invention assist in the generation of substances affecting aroma, flavor and taste and the diffusion of those substances into the liquid matrix.

After the roasting and comminuting the solid raw material has been carried out simultaneously in the same step, the processed material may be subjected to further downstream processes, such as conching or liquefaction. Such steps are commonly known.

For example, conching involves mixing of the material for very long periods of time in special kneading machines, preferably with the further addition of one or more components, such as in the case where the material is chocolate the addition of cocoa butter. The conching step is generally performed at a temperature sufficient for keeping the mixture in the liquid state during which the lumps of various ingredients are reduced in size in order to obtain a smooth and homogeneous mass.

According to the present invention, it has been found that by previously performing the method of the present invention an acceleration of downstream processing steps such as conching can be achieved. It is believed that the diffusion kinetics of the aromatic substances to the amorphous surface is shortened, and thus the duration of processing steps such as conching can be significantly reduced to preferably 50% of their conventional duration.

According to one embodiment of the present invention, conching is at least partially replaced by a liquefaction step, which is known from e.g. WO 2005/077197 A1.

With the method of the present invention, a product may be obtained that is characterized by a different amount of substances that impart aroma, flavor and taste to the product.

Thus, the present invention is also related to a product, preferably cocoa mass, obtainable by the method according to the present invention.

The present invention is also related to a plant for carrying out a method according to the present invention, comprising a unit for carrying out roasting and comminuting solid raw material simultaneously in the same step.

Preferably, the unit for carrying out simultaneous roasting and comminution of solid raw material in the same step is a grinding and homogenizing device, which comprises a substantially horizontally arranged drum, the end of which is open and not or only slightly tapered, and a shaft which is at least partially provided with pins. Such a device has been described above.

Preferably, the grinding and homogenizing device has a turbine engine function and can thus suck in air during operation.

According to one particular embodiment of the present invention, the plant comprises several, preferably two or three, grinding and homogenizing devices arranged in series for carrying out roasting and comminution of solid raw material simultaneously in the same step.

Alternatively, only one grinding and homogenizing device may be provided and supplemented with lines for circulating material to be processed several times through said device. In other words, material exiting from the grinding and homogenizing device may be led through lines back to the inlet of said grinding and homogenizing device, in order to be subjected to a double-pass treatment, triple-pass treatment, or even further treatments.

The present invention will be hereinafter described with reference to non-limiting examples and drawings.
- Fig. 1: shows a conventional plant with separate steps of grinding and roasting;
- Fig. 2: shows an embodiment of a plant according to the present invention with simultaneous grinding and roasting in the same step;
- Fig. 3: shows a further embodiment of a plant according to the present invention with simultaneous grinding and roasting in the same step that can be performed in the same device in several passes;
- Fig. 4: shows a further embodiment of a plant according to the present invention with simultaneous grinding and roasting in the same step that can be repeatedly performed in consecutive devices;
- Fig. 5: shows the result of nasal sensory perception performed in example 1;
- Fig. 6: shows the result of retronasal sensory perception performed in example 1;
- Fig. 7: shows the generation of pyrazine groups in example 1;
- Fig. 8: shows the depletion of ester groups in example 1;
- Fig. 9: shows the result of nasal sensory perception performed in example 3;
- Fig. 10: shows the result of retronasal sensory perception performed in example 3;
- Fig. 11: shows the generation of pyrazine groups after three passes in example 3;
- Fig. 12: shows the generation of pyrazine groups after five passes in example 3;
- Fig. 13: shows the depletion of ester groups in example 3.

In the figures, same reference numbers denote the same components.

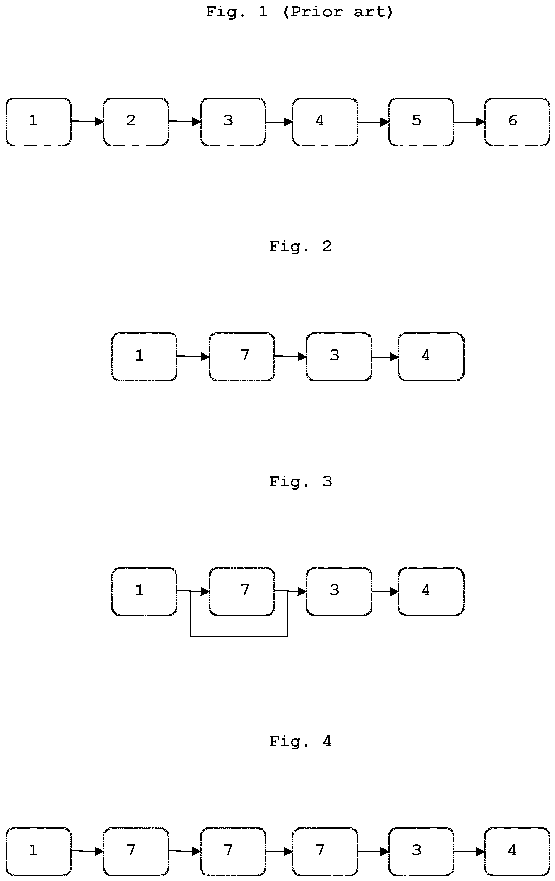

In Fig. 1, a schematic illustration of a conventional plant with separate steps of grinding and roasting is shown. The material to be processed first enters a mixing device 1 and is then subjected to roasting in a roasting device 2. The roasted material undergoes debacterization in a debacterization device 3 and is then transferred to a braking/winnowing device 4. Thereafter, the material is subjected to grinding in a grinding device 5, and finally to an optional step of thin-film evaporation in a thin-film evaporator device 6.

The above devices and process steps are known and need not be discussed in detail.

In Fig. 2, a schematic illustration of an embodiment of a plant according to the present invention with simultaneous grinding and roasting in the same step is shown. As compared to Fig. 1, the device 2, 5 and (optionally) 6 are replaced by a grinding and homogenizing device 7.

In Fig. 3, a schematic illustration of a further embodiment of a plant according to the present invention is shown with simultaneous grinding and roasting in the same step that can be performed in the same device in several passes. For that purpose, the outlet of a grinding and homogenizing device 7 is connected via a line to the inlet of the same device 7. Material exiting the grinding and homogenizing device 7 can be returned to the inlet of said device 7 and processed again in further passes, for example two or three passes, in the same device. The line connecting the outlet of a grinding and homogenizing device 7 to the inlet of the same device 7 can be opened and closing by conventional shut-off units such as valves.

In Fig. 4, a schematic illustration of a further embodiment of a plant according to the present invention is shown with simultaneous grinding and roasting in the same step that can be repeatedly performed in consecutive grinding and homogenizing devices 7. In Fig. 4, three consecutive grinding and homogenizing devices 7 are shown. It is to be understood, however, that the number of consecutive grinding and homogenizing devices 7 can be chosen as desired, and that for example 2 to 10 consecutive grinding and homogenizing devices 7 may be provided.

### Example 1

Cocoa nibs with an initial moisture of 4.4% (determined by means of Karl-Fischer titration) were introduced into a commercially available grinding and homogenizing device (Licomill, brand name Pulsar) having a length of 330 mm and a diameter of 200 mm. The solid material was introduced at a feeding rate of 100 to 200 kg/h into the processing zone of a grinding and homogenizing device, where a temperature of 50°C was set.

The material that exited the grinding and homogenizing device through its outlet had a temperature of 55-60°C and a moisture content of 3,19%, resulting in a reduction of the moisture content of the material of about 27%. The moisture reduction is an indicator of the stripping-off action during the simultaneous and continuous actions of grinding and roasting within the processing zone.

The particle size of the material was determined by means of laser diffraction (Malvern MasterSizer 3000, x80 and x90 based values, referring to 80% and 90% of the solid volume population that has a particle size below the indicated value) and wet sieving analysis (residue of particles above 75 µm sieve). Before entering the processing zone of the grinding and homogenizing device, the solid material only consisted of particles having an average particle size above 75 µm. The particle size of the material that exited the grinding and homogenizing device through its outlet was 20 µm (X80) and 35 µm (X90), respectively, and only a residual amount of 17.5% of all the particles had a size above 75 µm. The particle size reduction is an indicator of the grinding action that occurs during the method of the present invention along with roasting.

The material that exited the grinding and homogenizing device through its outlet was introduced with the same feeding rate into a second grinding and homogenizing device having the same design (length, diameter) as the previous (first) grinding and homogenizing device and being arranged downstream of the first grinding and homogenizing device. The infeed material was in a liquid state (slurry), since during processing in the previous (first) grinding and homogenizing device fat and oil was released from the Cocoa nibs.

In the processing zone of the second grinding and homogenizing device, a temperature of 50°C was set.

The material that exited the second grinding and homogenizing device through its outlet had a temperature of 60-65°C and a moisture content of 2,8%, resulting in an overall reduction of the moisture content of the material of about 36%. The particle size of the material that exited the second grinding and homogenizing device through its outlet was 16 µm (X80) and 27 µm (X90), respectively, and only a residual amount of 9,9 % of all the particles had a size above 75 µm.

The material that exited the grinding and homogenizing device through its outlet was introduced with the same feeding rate into a third grinding and homogenizing device having the same design (length, diameter) as the first grinding and homogenizing device and being arranged downstream of the first grinding and homogenizing device. The infeed material was in a liquid state (slurry), since during processing in the previous grinding and homogenizing devices fat and oil was released from the Cocoa nibs.

In the processing zone of the third grinding and homogenizing device, a temperature of 50°C was set.

The material that exited the third grinding and homogenizing device through its outlet had a temperature of 65-70°C and a moisture content of 2,5%, resulting in an overall reduction of the moisture content of the material of about 43%. The particle size of the material that exited the second grinding and homogenizing device through its outlet was 15 µm (X80) and 25 µm (X90), respectively, and only a residual amount of 7,5 % of all the particles had a size above 75 µm.

The result of the three processing steps is illustrated again in table 1 below.

**Table 1**

| | Starting material | 1^{st} pass | 2^{nd} pass | 3^{rd} pass |
|---|---|---|---|---|
| | Cocoa nibs (solid) | Cocoa slurry (liquid) * | Cocoa slurry (liquid)* | Cocoa slurry (liquid)* |
| Processing zone temperature (°C) | | 50 | 50 | 50 |
| Mass temperature (°C)* | | 55-60°C | 60-65°C | 65-70°C |
| Moisture content (wt.-%) * * | 4.4 | 3.2 | 2.8 | 2.5 |
| Moisture reduction per pass vs infeed material (cocoa nibs) | | ~27% | ~36% | ~43% |
| Particle size µm (x80) | - | 20 | 16 | 15 |
| Particle size µm (x90) | - | 35 | 27 | 25 |
| Particle % > 75 µm | 100 | 17.5 | 9.9 | 7.5 |

| | | | | |
|---|---|---|---|---|
| "All material parameters are with respect to the exit from the respective pass. **wt.-% with respect to the entire amount of the material | | | | |

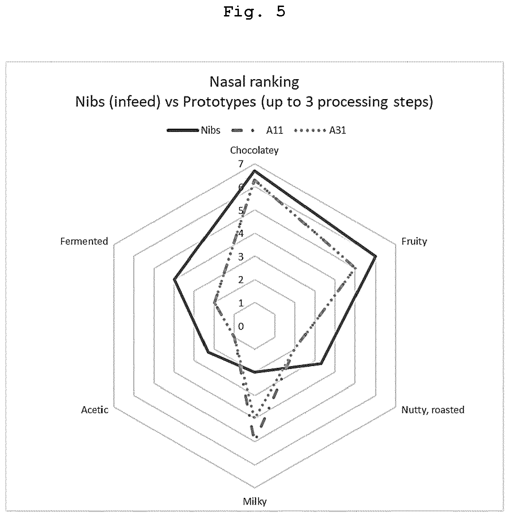

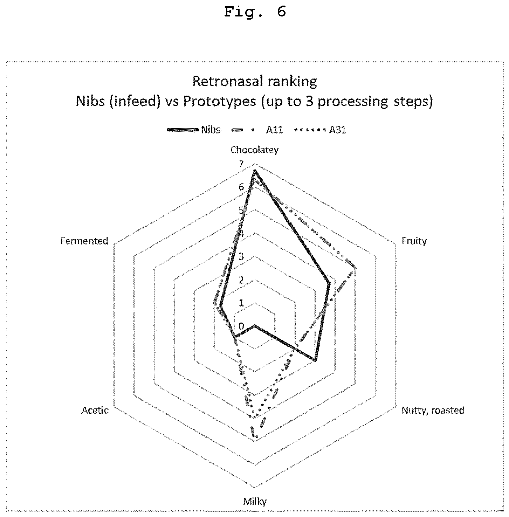

The impact of the method of the present invention (roasting and comminuting the solid raw material simultaneously in the same step) on sensory perception by probands was tested in two different ways (nasal (i.e. directly through the nose) and retronasal (i.e. through the mouth via the pharynx to the nasal cavity)). The tests were conducted with the untreated cocoa nibs that were used as starting material, and the material that was obtained after the 1^{st} and 3^{rd} pass respectively. The results are shown in Figs. 5 and 6, wherein a one-unit difference is considered as significant.

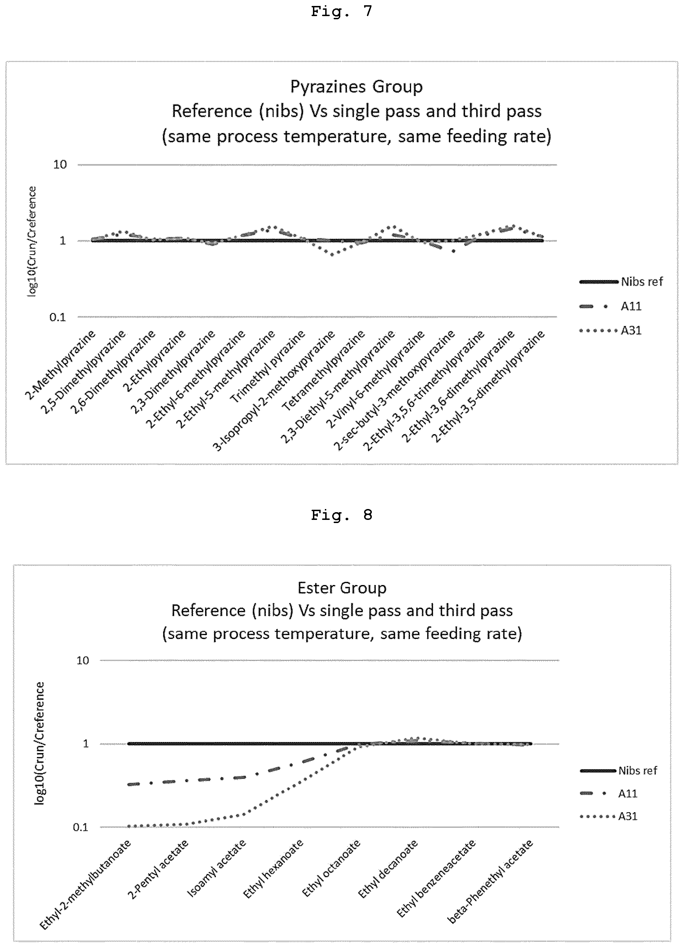

The impact of the method of the present invention (roasting and comminuting the solid raw material simultaneously in the same step) on the aroma profile was also determined, using GC (gas chromatography). As exemplary compounds, the amount of pyrazine groups in the material that were generated during the method of the present invention was analyzed in the starting material, and the material that was obtained after the 1^{st} and 3^{rd} pass respectively. The results are shown in Fig. 7.

As other exemplary compounds, the amount of ester groups in the material that were depleted during the method of the present invention was analyzed in the starting material, and the material that was obtained after the 1^{st} and 3^{rd} pass respectively. The results are shown in Fig. 8.

### Example 2

Cocoa nibs with an initial moisture of 4.4% (determined by means of Karl-Fischer titration) were introduced into a commercially available grinding and homogenizing device (Licomill, brand name Pulsar) having a length of 330 mm and a diameter of 200 mm. The solid material was introduced at a feeding rate of 10 Hz into the processing zone of a grinding and homogenizing device.

The temperature in the processing zone was set to different values of 50°c, 60°C and 70°C, and the impact thereon on the method of the present invention (roasting and comminuting the solid raw material simultaneously in the same step). The results are shown in table 2. For each temperature, the method was performed once (one pass). The values were measured as described in example 1.

**Table 2**

| | Starting material | One pass | One pass | One pass |
|---|---|---|---|---|
| | Cocoa nibs (solid) | Cocoa slurry (liquid)* | Cocoa slurry (liquid)* | Cocoa slurry (liquid)* |
| Processing zone temperature (°C) | | 50 | 60 | 70 |
| Mass temperature | | 50-55°C | 55-60°C | 60-65°C |
| Moisture content (wt.-%) * * | 4.4 | 3.19 | 2.92 | 2.9 |
| Moisture reduction per pass vs infeed material (cocoa nibs) | | ~27% | ~33% | ~33% |
| Particle size µm (x80) | - | 20 | 21 | 24 |
| Particle size µm (x90) | - | 35 | 41 | 48 |
| Particle % > 75 µm | 100 | 17.5 | 17.7 | 18.3 |

| | | | | |
|---|---|---|---|---|
| "All material parameters are with respect to the exit from the respective pass. **wt.-% with respect to the entire amount of the material | | | | |

### Example 3

Cocoa nibs were first subjected to pre-grinding in a colloid mill (run at 3250 rpm with a gap setting of 0,05 mm) and thereafter introduced into a commercially available grinding and homogenizing device (Licomill, brand name Pulsar) having a length of 330 mm and a diameter of 200 mm. The solid material was introduced at a feeding rate of 500 kg/h into the processing zone of a grinding and homogenizing device, where a temperature of 50°C was set.

Subsequently, the material was subjected to four additional consecutive passes in the same grinding and homogenizing device at the same processing zone temperature. The results are shown in table 3. The values were measured as described in example 1.

**Table 3**

| | Starting material | 1^{st} pass | 2^{nd} pass | 3^{rd} pass | 4th pass | 5th pass |
|---|---|---|---|---|---|---|
| | Cocoa nibs (solid) | Cocoa slurry (liquid)* | Cocoa slurry (liquid)* | Cocoa slurry (liquid)* | Cocoa slurry (liquid)* | Cocoa slurry (liquid)* |
| Processing zone temperature (°C) | | 50 | 50 | 50 | 50 | 50 |
| Mass temperature* | | ~55°C | ~65°C | ~75°C | ~80°C | ~85°C |
| Particle size µm (x80) | - | 18.5 | 16.5 | 14.9 | 14.1 | 13.8 |
| Particle size µm (x90) | - | 34.6 | 29.9 | 24.2 | 22.5 | 23 |
| Particle % > 75 µm | 100 | 12.6 | 8.5 | 6.3 | 5.2 | 4.5 |

| | | | | | | |
|---|---|---|---|---|---|---|
| "All material parameters are with respect to the exit from the respective pass. **wt.-% with respect to the entire amount of the material | | | | | | |

The pre-grinding step had a favorable effect on the grinding action in the method of the present invention.

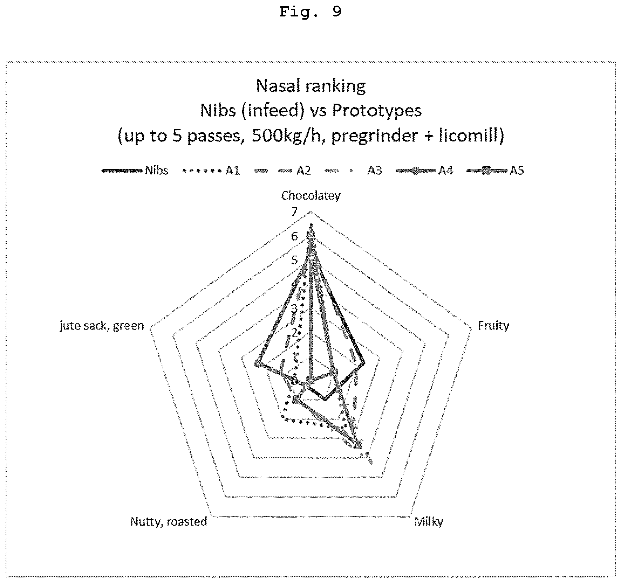

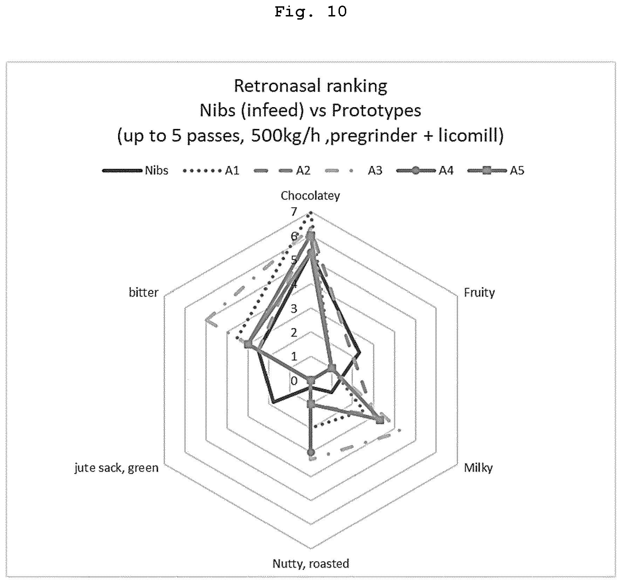

The impact of the method of the present invention (roasting and comminuting the solid raw material simultaneously in the same step) on sensory perception by probands was tested as described in example 1 in two different ways (nasal and retronasal). The tests were conducted with the untreated cocoa nibs that were used as starting material, and the material that was obtained after the 1^{st} and 3^{rd} pass respectively. The results are shown in Figs. 9 and 10, wherein a one-unit difference is considered as significant. Remarkably, the bitterness increased during the method of the present invention as compared to the starting material (cocoa nibs). This is clearly linked to the stripping of volatiles that if present may mask this taste.

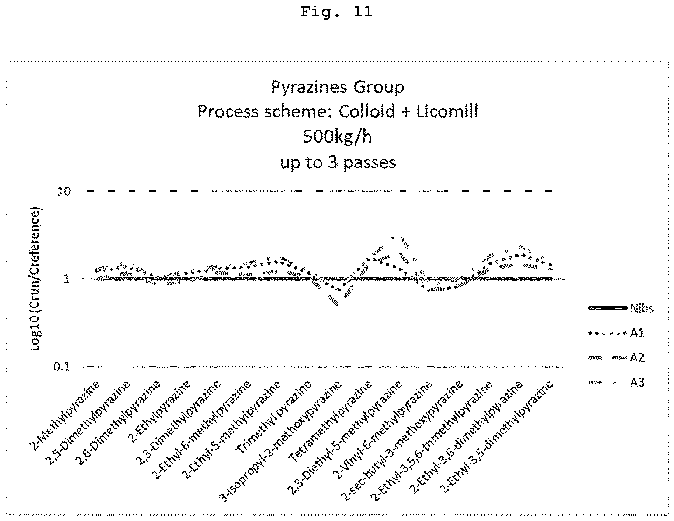

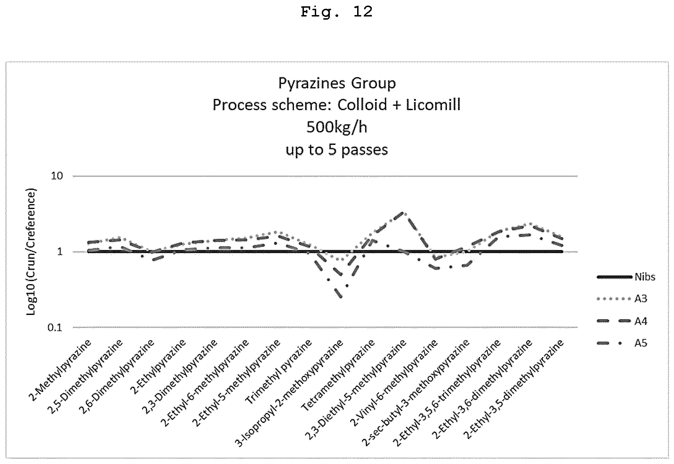

The impact of the method of the present invention (roasting and comminuting the solid raw material simultaneously in the same step) on the aroma profile was also determined, using GC (gas chromatography). As exemplary compounds, the amount of pyrazine groups in the material that were generated during the method of the present invention was analyzed in the starting material, and the material that was obtained after the respective consecutive passes, respectively. The results are shown in Figs. 11 and 12.

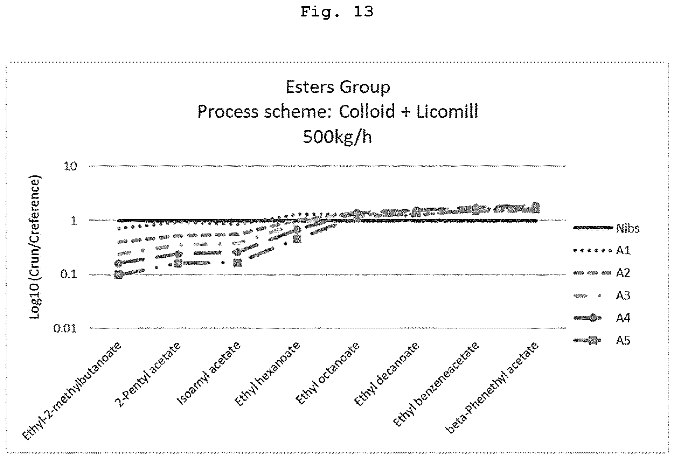

As other exemplary compounds, the amount of ester groups in the material that were depleted during the method of the present invention was analyzed in the starting material, and the material that was obtained after the respective consecutive passes, respectively. The results are shown in Fig. 13.

## Claims

1. A method of processing a material, said material being selected from the group consisting of a solid raw material that upon grinding releases a liquid phase, and a combination of a solid raw material and a liquid matrix, the method comprising roasting and comminuting the solid raw material, **characterized in that** roasting and comminuting the solid raw material are carried out simultaneously in the same step.

2. Method according to claim 1, **characterized in that** the solid raw material is selected from the group consisting of cocoa-containing material, preferably cocoa beans and cocoa nibs, nuts and seeds, preferably almonds.

3. Method according to claim 1 or 2, **characterized in that** the method is carried out continuously with a capacity of 100 to 1000 kg /hour.

4. Method according to one of the preceding claims, **characterized in that** volatile organic components (VOC) and moisture are removed from the material simultaneously with the roasting and comminuting of the solid raw material.

5. Method according to one of the preceding claims, **characterized in that** roasting and comminution of the solid raw material are carried out simultaneously in a grinding and homogenizing device, which comprises a substantially horizontally arranged drum, the end of which is open and not or only slightly tapered, and a shaft which is at least partially provided with pins.

6. Method according to claim 5, **characterized in that** air is sucked into the grinding and homogenizing device due to a turbine engine action during the roasting and comminution of the solid raw material.

7. Method according to one of the preceding claims, **characterized in that** the same process step of simultaneously roasting and comminuting the solid raw material is carried out several times, preferably twice or three times.

8. Method according to claim 7, **characterized in that** the single process step of simultaneous roasting and comminution of the solid raw material is carried out several times in a single unit or in units arranged one behind the other.

9. Method according to one of the preceding claims, **characterized in that** the method comprises a step of conching downstream of the simultaneous roasting and comminution.

10. Method according to claim 9, **characterized in that** the conching is at least partially replaced by a liquefaction step.

11. Product, preferably cocoa mass, obtainable by the method according to any one of claims 1 to 10.

12. A plant for carrying out a method according to any one of claims 1 to 10, comprising a unit for carrying out roasting and comminuting solid raw material simultaneously in the same step.

13. Plant according to claim 12, **characterized in that** the unit for carrying out simultaneous roasting and comminution of solid raw material in the same step is a grinding and homogenizing device, which comprises a substantially horizontally arranged drum, the end of which is open and not or only slightly tapered, and a shaft which is at least partially provided with pins.

14. Plant according to claim 13, **characterized in that** the grinding and homogenizing device has a turbine engine function and can suck in air during operation.

15. Plant according to one of claims 12 to 14, **characterized in that** the plant comprises several, preferably two or three, grinding and homogenizing devices arranged in series for carrying out roasting and comminution of solid raw material simultaneously in the same step.
